# EUROPÄISCHE PATENTANMELDUNG

(11) **EP 0 826 916 A2**
(43) Veröffentlichungstag der Anmeldung: **04.03.1998**
(21) Anmeldenummer: 97114275.7
(22) Anmeldetag: 19.08.1997
(51) Int. Cl.: F16L 37/084

(54) **Verbindung zwischen einem ersten und einem zweiten Kupplungsstück**

(30) Priorität: 27.08.1996 DE 19634521
(71) Anmelder: ADAM OPEL AG, 65423 Rüsselsheim (DE)
(72) Erfinder: Bausch, Olaf, Dipl.-Ing., 35789 Weilmünster (DE)
(74) Vertreter: Bergerin, Ralf, Dipl.-Ing.

(57) **Zusammenfassung**

Bei Steckverbindern für Rohre oder Schläuche besteht die Gefahr, daß ihre Montage vom Monteur aus den unterschiedlichsten Gründen nicht richtig durchgeführt wird, z. B. weil sich der Kupplungszapfen (6) in einem schwer zugänglichen Bereich befindet. Der Stecker (2) wird z. B. nicht soweit aufgesteckt, daß die beiden Kupplungsstücke miteinander verrasten können. Aber auch bei einer fehlerbehafteten Montage wird häufig eine Wirkverbindung hergestellt, bei der die beiden Kupplungsstücke luft- bzw flüssigkeitsdicht miteinander verbunden sind. Es ist allerdings davon auszugehen, daß sich eine solche Verbindung während des Betriebs lösen wird.

Die Erfindung schlägt vor, zwischen den beiden Kupplungsstücken eine Feder (30) vorzusehen, die jene bei nicht vollständiger Montage soweit wieder auseinanderdrückt, daß keine oder nur eine nicht ausreichende Wirkverbindung zustande kommt. Bei einer Funktionskontrolle der Verbindung kann die Undichtigkeit festgestellt werden. Dies ist in diesem Fall ein eindeutiger Hinweis darauf, daß auch die mechanische Verbindung nicht ausreichend ist.

## Beschreibung

Die Erfindung bezieht sich auf eine Verbindung zwischen einem ersten und einem zweiten Kupplungsstück.

In der DE 35 25 402 A1 ist die Kupplung zweier Rohrenden beschrieben, bei der das eine Rohrende in das andere als Muffe ausgebildete Rohrende eingesteckt wird. Zum gegenseitigen Verrasten der Rohrenden befindet sich in der Muffe ein Sicherungsring mit Rastfingern, die in Einbuchtungen am Ende des eingesteckten Rohres eingreifen. In einer Innennut der Muffe liegt zum Abdichten der Rohrverbindung ein Dichtungsring. Da das Ende des Einsteckrohres in der verrasteten Stellung über die Dichtung hinausreicht, wird eine Dichtwirkung schon erzielt, bevor die Rohre miteinander verrastet und damit in ihrer Halteposition sind.

Derartige Kupplungen werden für verschieden Zwecke eingesetzt. So muß z. B. im Fahrzeugbau ein Unterdruckrohr an den Luftansaugbereich eines Verbrennungsmotors angeschlossen werden, um eine Verbindung zu einem pneumatisch arbeitenden Bremskraftverstärkers herzustellen. Ein mit dem Unterdruckrohrende verbundener Stecker wird dazu auf einen Zapfen am Krümmereinlaß des Verbrennungsmotors aufgesteckt und mit ihm verrastet. Nach der Montage findet stets noch eine einfach durchzuführende Funktionsprüfung statt, bei der festgestellt werden soll, ob im Bremskraftverstärker ein Unterdruck aufgebaut wird, ob also eine Wirkverbindung besteht.

Dabei liegt das folgende Problem vor: Wenn der Stecker bei der Montage nicht bis zur Verrastung auf den Zapfen aufgeschoben worden ist, kann die schon bestehende Wirkverbindung durch die im Betrieb auftretenden Erschütterungen gelöst werden. Dies kann in vielen Fällen unter Sicherheitsaspekten nicht hingenommen werden, so daß eine Sicherheitsüberprüfung stattfinden muß.

Eine direkte Überprüfung nach der Montage ist schwierig, da sich der Zapfen häufig in einem nur schwer zugänglichen Bereich im Motorraum befindet: Dem Monteur fällt es schwer, mittels einer Zugprobe festzustellen, ob Stecker und Zapfen tatsächlich miteinander verrastet sind. Da darüber hinaus die Montage in einer lauten Umgebung erfolgt, so daß die Schnappgeräusche beim Verbinden der beiden Kupplungsstücke (Zapfen, Stecker) überhört werden können, ist es nicht möglich, das Ausbleiben eines Schnappgeräuschs als Indiz für eine nicht ausreichende mechanische Kupplung heranzuziehen

Auch mittels der Funktionsprüfung läßt sich nicht feststellen, ob der Stecker mit dem Zapfen verrastet ist. Da die beiden zu kuppelnden Stücke schon in Wirkverbindung stehen, bevor die Halteposition erreicht ist, kann aufgrund einer bestehenden Wirkverbindung nicht gefolgert werden, daß die zu kuppelnden Stücke auch ausreichend mechanisch miteinander gekoppelt sind,

Dies Problem tritt generell sowohl bei elektrischen Wirkverbindungen als auch bei gas- oder flüssigkeitsleitenden Verbindungen (im Überdruck- und Unterdruckbereich) immer dann auf, wenn die Kupplung so gestaltet ist, daß die Wirkverbindung schon besteht, bevor die beiden Kupplungsstücke miteinander verrastet oder verklemmt sind.

Das zu lösende Problem besteht somit darin, eine Kupplung bestehend aus einem ersten und einem zweiten Kupplungsstück zu realisieren, die in einfacher Weise auf mechanische Festigkeit ihrer Verbindung überprüft werden kann.

Dazu schlägt die Erfindung vor, daß zwischen den Kupplungsstücken eine entgegen der Montagebewegung arbeitende Feder angeordnet ist, die die Kupplungsstücke in eine Position ohne ausreichende Wirkung bringt, falls die Halteposition bei der Montage nicht erreicht worden ist.

Dies hat den Vorteil, daß bei der nach der Montage erfolgenden Funktionsprüfung sicher festgestellt werden kann, ob die beiden Kupplungsstücke ausreichend fest miteinander verbunden sind. Wird bei der Prüfung keine oder eine nicht ausreichende Wirkung festgestellt (im Falle einer Unterdruckverbindung: kein ausreichender Unterdruck), so ist dies ein eindeutiger Hinweis darauf, daß die Rastmittel nicht gegriffen haben. Wenn eine ausreichende Wirkung festgestellt wird, läßt dies den Schluß zu, daß auch die mechanische Festigkeit der Verbindung ausreichend ist, da die Feder bei nicht erfolgter Verrastung die Kupplung wieder aufgehoben hätte.

Im einfachsten Fall kann eine in Montagerichtung stauchbare Feder vorgesehen werden, die ein geringes Blockmaß aufweisen sollte, damit die Kupplungsstücke nicht unnötig verlängert werden müssen. Eine geeignete Feder weist mindestens ein elastisches Bogenstück auf, wobei zu beiden Seiten des Bogenstückes Arme befestigt sind, die verschwenkbar mit jeweils einem Teller verbunden sind. Bei der Montage werden die Teller aufeinander zu bewegt, wobei die Arme nach außen gedrückt werden und das Bogenstück zum Aufbau einer elastischen Spannung von einer Halbkreisform in eine Kreisform gedrückt wird.

Die weiteren Ansprüche beschreiben eine Steckverbindung für ein Unterdruckrohr eines Bremskraftverstärkers, wobei ein Stecker lösbar auf einem Zapfen aufsteckbar ist. Gerade in diesem Anwendungsfall ist es notwendig, die Kupplung auf ausreichende mechanische Festigkeit zu testen, da bei Ausbleiben des Unterdrucks für den Bremskraftverstärker keine ausreichende Bremskraft aufgebaut werden kann, so daß das Fahrzeug nicht so stark abgebremst werden kann, wie dies in kritische Situationen zu fordern ist.

Die Erfindung soll im folgenden anhand eines Ausführungsbeispiels dargestellt in drei Zeichnungen näher erläutert werden. Die Zeichnungen zeigen:
- Fig. 1:: die Explosionsdarstellung eines Steckers mit Feder,
- Fig. 2:: einen Längsschnitt durch einen Stecker und einen Zapfen in Vormontageposition und
- Fig. 3:: einen Längsschnitt durch einen Zapfen und einen Stecker in der Halteposition.

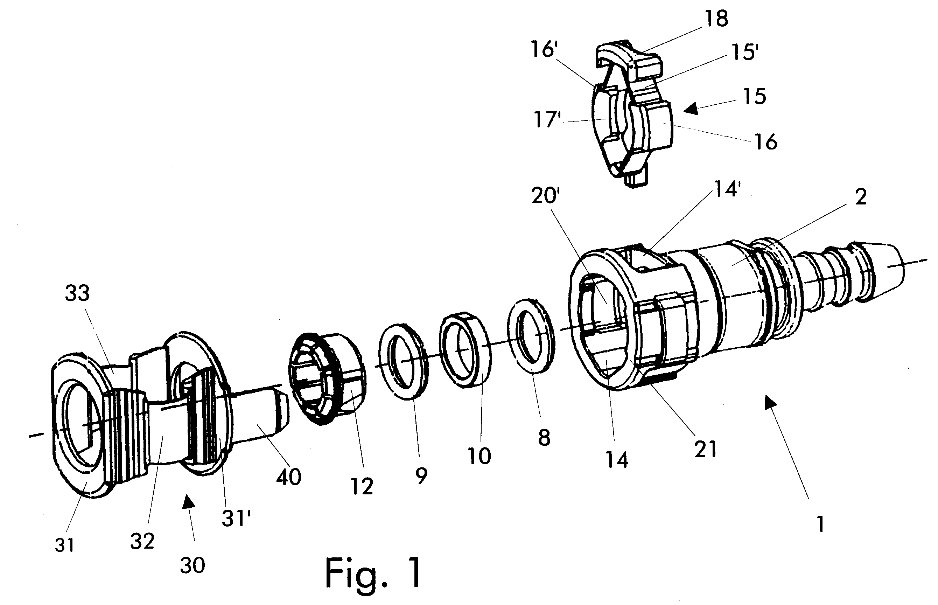

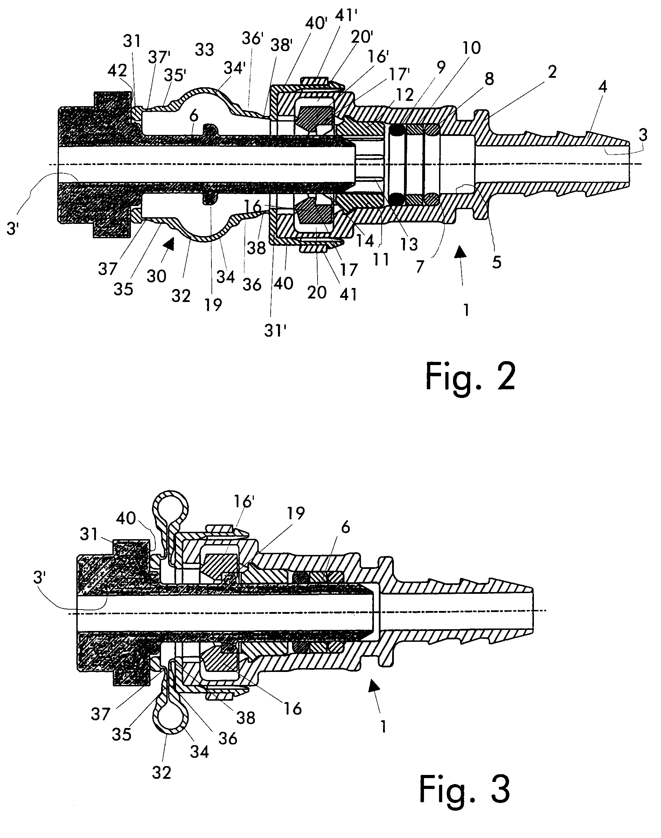

Zunächst wird auf Fig.1 und Fig.2 Bezug genommen. Der Stecker 1 besteht aus einem Grundkörper 2 mit einem Längskanal 3. Das eine Ende des Grundkörpers 2 ist als Verbindungszapfen 4 zum Aufstecken eines Rohres oder Schlauches ausgebildet.

Im Anschluß an den Verbindungszapfen 4 erweitert sich Längskanal 3 stufenweise in mehreren Abschnitten, wobei ein erste Abschnitt 5 im unmittelbaren Anschluß an den Verbindungszapfen 4 einen Innendurchmesser aufweist, der dem Außendurchmesser des Kupplungszapfens 6 entspricht. An den ersten Abschnitt 5 schließt sich ein zweiter Abschnitt 7 an, in dem zwei O-Dichtringe 8, 9 sowie ein Zwischenring 10 nacheinander eingesetzt sind. In einen daran anschließenden dritten Abschnitt 11 ist eine Führungshülse 12 eingesetzt und verrastet. Der Innendurchmesser der Führungshülse 12 entspricht ebenfalls dem Außendurchmesser des Kupplungszapfens 6. In der Innenmantelfläche der Führungshülse 12 befinden sich mehrere Längsnuten 13.

An den dritten Abschnitt 11 schließt sich eine Tasche 14 mit einer seitlichen Öffnung 14' an, durch die hindurch ein Riegelelement 15 in die Tasche eingesetzt wird. Das Riegelelement 15 besteht aus einem elastisch aufweitbaren Ring 15' mit zwei gegenüberliegenden Riegelstücken 16, 16', die jeweils mit einen nach innen weisenden Haken 17, 17' versehen sind, und einer gegenüber einem Riegelstücken 16, 16' um 90° versetzten Druckplatte 18, die aus der Öffnung 14 hervorragt, wenn das Riegelelement 15 in die Tasche 14 eingesetzt ist. Als Gegenstück zu den Riegelstücken 16, 16'befindet sich an der Außenmantelfläche des Kupplungszapfens 6 ein umlaufender Rastbund 19.

Wenn der Stecker 1 auf den Kupplungszapfen 6 aufgesetzt wird, werden die Riegelstücke 16, 16' vom Rastbund 19 unter elastischer Aufweitung des Ringes 15' zunächst in die ihnen zugeordneten Ausnehmungen 20, 20' im Grundkörper 2 gedrückt, um anschließend hinter den Rastbund 19 zu greifen, sobald der Stecker 1 vollständig aufgeschoben worden ist. Zum Lösen dieser Verriegelung wird durch Niederdrücken der Druckplatte 18 der Ring 15' wieder aufgeweitet, so daß die in die Ausnehmung hineingedrückten Riegelstücke den Rastbund wieder freigeben.

An der Stirnfläche 21 des Grundkörpers 2 ist eine Feder 30 befestigt. Diese besteht aus zwei in axialer Richtung hintereinander angeordneten Tellern 31, 31', die über zwei sich in axialer Richtung erstreckende Verbindungsstücke 32, 33 miteinander verbunden sind.

Jedes Verbindungsstück 32, 33 ist symmetrisch aufgebaut. Im mittleren Bereich befindet sich jeweils ein Bogenstück 34, 34', an den sich in beiden Richtungen je ein Arm 35, 36, 35', 36' anschließt. Die Arme sind jeweils flache, in sich steife Rechteckstücke, die mit einer Längsseite mittels eines Filmscharniers 37, 38, 37', 38' am zugehörigen Teller befestigt sind. Das Bogenstück 34, 34' hat in seinem entspannten Zustand (Fig. 2) die Form einer Halbhülse, die mit ihren Längsseiten über Verdickungsbereiche an die Arme 35, 36, 35', 36' anschließt.

Wenn die beiden Teller 31, 31' aufeinander zu bewegt werden, klappen die Arme 35, 36, 35', 36' soweit nach außen, bis die Innenfläche der Arme eines Verbindungsstückes aneinandergelegt sind bzw mit ihren flachen Seiten gegenüberliegen. Das Bogenstück 34, 34' wird dabei zu einer Vollhülse (in der Querschnittsdarstellung der Fig. 3 zu einem Vollkreis) zusammengebogen.

Da die Feder 30 aus elastischem Kunststoff, z. B. Polyamid besteht, baut sich dabei in den Bogenstücken 34, 34' eine federnde Spannung auf, die bemüht ist, die beiden Teller 31, 31' wieder auseinander zu drücken.

Wie man der Fig. 3 deutlich entnehmen kann, liegt der Vorteil einer solchen Feder darin, daß ein sehr geringes Blockmaß erreicht wird. Die Länge der Arme 35, 36, 35', 36' ist dabei so gewählt, daß bei zusammengedrückten Tellern 31, 31' die Bogenstücke sich außerhalb des durch die radialen Ausdehnungen des Grundkörpers 2 gegebene Ausdehnung des einen Tellers 31' liegen.

Der sich am Grundkörper 2 abstützende Teller 31' verfügt über zwei sich in axialer Richtung erstreckende Rasthaken 40, 40', die in entsprechende Gegenstücke 41, 41' am Grundkörper 2 eingreifen.

Die Fig. 2 zeigt die Ausgangsposition bei der Montage der Steckverbindung. Das Ende des Kupplungszapfens 6 steckt über eine kurzen Abschnitt in der Hülse 12. Die Feder 30 befindet sich im entspannten Zustand, wobei die Teller 31, 31' am Grundkörper 2 des Steckers 1 bzw. an einer senkrecht zum Kupplungszapfen 6 stehenden Anschlagfläche 42 anliegen.

In dieser Position besteht keine Wirkverbindung, da Luft durch die Längsrillen 13 in die Längskanäle 3, 3' im Grundkörper 2 und im Kupplungszapfen 6 einströmen kann und sich daher kein Unterdruck im angeschlossenem Unterdruckrohr aufbauen kann.

Wenn der Stecker auf die Anschlagfläche 42 zu bewegt wird, wird das Ende des Kupplungszapfens 6 bis in den ersten Abschnitt 5 geführt. Da die O-Ringe 8, 9 an der Außenmantelfläche des Kupplungszapfens 6 anliegen, sind Kupplungszapfen 6 und Stecker 1 luftdicht miteinander verbunden Es besteht aber noch keien mechanische Verbindung , da sie nicht miteinander verrastet sind. Dazu muß der Monteur die Aufsteckkraft aufbringen, die notwendig ist, um die Riegelstücke 16, 16' nach außen zu drücken, damit die Haken 17,17' hinter den Rastbund greifen können. Erst jetzt sind Stecker 1 und Kupplungszapfen 6 derart miteinander verbunden, daß eine rüttelfeste und druckdichte Verbindung existiert.

Wenn der Monteur den Stecker allerdings nicht bis in die Halteposition aufschiebt, in der die beiden Kupplungsstücke miteinander verriegelt sind, wird die beim Aufschieben gespannte Feder 30 den Stecker 1 wieder soweit zurückdrücken, bis die in Fig. 2 dargestellte Position erreicht ist, in der keine Wirkverbindung besteht.

Mit Hilfe der Feder 30 wird somit erreicht, daß zwischen Wirkverbindung und mechanischer Kupplung ein eindeutiger Zusammenhang besteht. Eine Wirkverbindung existiert nur dann, wenn die beiden Kupplungsstücke miteinander verrastet sind.

Dies eröffnet die Möglichkeit, durch die vorgesehene Funktionsprüfung auch festzustellen, ob eine mechanische Verbindung gegeben ist.

## Patentansprüche

1. Verbindung zwischen einem ersten und einem zweiten Kupplungsstück, die durch eine Montagebewegung in eine Halteposition bringbar sind, in der sie form- und/oder reibschlüssig derart gekoppelt sind, daß die im spezifischen Einsatz auftretenden mechanischen Belastungen die Verbindung nicht lösen können, wobei schon vor Erreichen der Halteposition eine Wirkverbindung besteht, **dadurch gekennzeichnet,** daß zwischen den Kupplungsstücken (1, 6) eine entgegen der Montagebewegung arbeitende Feder (30) angeordnet ist, die die Kupplungsstücke (1, 6) in eine Position ohne oder nicht ausreichender Wirkverbindung bringt, falls die Halteposition bei der Montage nicht erreicht worden ist.

2. Verbindung nach Anspruch 1, **dadurch gekennzeichnet,** daß die Feder (30) in Montagerichtung stauchbar angeordnet ist und ein geringes Blockmaß aufweist.

3. Verbindung nach Anspruch 2, **dadurch gekennzeichnet,** daß die Feder mindestens ein elastisches Bogenstück (34, 34') aufweist.

4. Verbindung nach Anspruch 3, **dadurch gekennzeichnet,** daß zu beiden Seiten des Bogenstückes (34, 34') Arme (35, 36, 35', 36') befestigt sind und daß jeder Arm (35, 36, 35', 36') verschwenkbar mit jeweils einem an einem der Kupplungsstücke abstützbaren Teller (31, 32) verbunden ist.

5. Verbindung nach Anspruch 4, **dadurch gekennzeichnet,** daß das Bogenstück (34, 34') in seiner entspannten Phase einen Halbkreis und in seiner gespannten Phase einen nahezu vollständigen Kreis beschreibt.

6. Verbindung nach einem der vorhergehenden Ansprüche, **dadurch gekennzeichnet,** daß ein erstes Kupplungsstück als Kupplungszapfen (6) und ein zweites Kupplungsstück als Stecker (1) ausgebildet sind, die beide in Längsrichtung von je einem Kanal (3, 3') durchsetzt sind, daß am Kupplungszapfen (6) ein Rastbund (19) ausgebildet und im Stecker (1) elastisch nach außen drückbare Riegel (16, 16') vorgesehen sind, die in der Halteposition den Rastbund (19) hintergreifen.

7. Verbindung nach Anspruch 6, **dadurch gekennzeichnet,** daß die Feder (30) am Grundkörper (2) des Steckers (1) gehalten ist

8. Verbindung nach Anspruch 7, **dadurch gekennzeichnet,** daß an einem der Teller (31) zur Befestigung am Grundkörper (2) mindestens ein in axialer Richtung abstehender Rasthaken (40, 40') vorgesehen ist.

9. Verbindung nach Anspruch 6, **dadurch gekennzeichnet,** daß im Grundkörper (2) vor und hinter einem Dichtring Führungsabschnitte für den Kupplungszapfen (6) ausgebildet sind, wobei ein Führungsabschnitt an einer einsetzbaren Führungshülse (12) vorgesehen ist.
